# EUROPEAN PATENT APPLICATION

(11) **EP 3 148 126 A1**
(43) Date of publication of application: **29.03.2017**
(21) Application number: 15796774.6
(22) Date of filing: 20.05.2015
(51) Int. Cl.: H04L 12/717

(54) **COMMUNICATION APPARATUS, CONTROL APPARATUS, COMMUNICATION SYSTEM, AND TRANSMISSION CONTROL METHOD**

(30) Priority: 21.05.2014 JP 2014105449
(71) Applicant: NEC Corporation, Tokyo 108-8001 (JP)
(72) Inventor: SASAKI, Takashi, Tokyo 108-8001 (JP); SUZUKI, Yoji, Tokyo 108-8001 (JP)
(74) Representative: Reeve, Nicholas Edward
(86) International application number: PCT/JP2015/064455
(87) International publication number: WO 2015/178415

(57) **Abstract**

The objective of the invention is to provide an enriched method for suppressing transmissions of inquiry messages of flow entry. A communication apparatus comprises: a packet reception notification unit that, upon reception of predetermined packets, transmits, to a predetermined control apparatus, packet reception notifications indicating the receptions of the packets; and a packet monitor unit that receives, from the packet reception notification unit, a designated packet having been designated in advance among the predetermined packets and that, if a status value included in the designated packet satisfies a predetermined condition, inhibits the transmission of the packet reception notification to the control apparatus.

## Description

### [Technical Field]

[Description about Related Application]

The present invention is based upon Japanese Patent Application No. 2014-105449 (filed on May 21, 2014), the entire content of which is incorporated herein by reference.

The present invention relates to a communication apparatus, a control apparatus, a communication system, and a transmission control method, and relates particularly to a communication apparatus configured to transmit a notification about reception of an unknown packet to a control apparatus, a control apparatus, a communication system, and a transmission control method.

### [Background Art]

A network with centralized control such as OpenFlow described in NPLs 1 and 2 is known. It is known that, when a load is intensively applied on a control apparatus (controller) of such a network with centralized control, registration of necessary control information (flow entry) is delayed, that may disable communications or allow continuously transferring a traffic to be stopped.

PTL 1 discloses a configuration capable of reducing a load on the controller, by reducing queries ("Packet-In messages" in NPL 2) regarding flow entries, which are a cause of an increase in load on the controller. Specifically, a switch in PTL 1 stacks a packet in which a query regarding a flow entry is made, and controls transfer of a packet having the same header information as that of the stacked packet until the flow entry is registered. By performing control so as to broadcast a packet having the same header information as that of the stacked packet, communications are enabled until the flow entry is registered.

PTL 2 discloses a configuration that, when an existing flow entry is changed to a flow entry for making a query regarding the flow entry, estimates a load to be applied on a controller as a result of the change and divides (splits) the flow entry when the load exceeds a permissible value.

PTL 3 discloses a configuration that embeds, in a packet, a processing content to be applied to the packet, in order to reduce a query regarding the flow entry.

PTL 4 discloses a control apparatus including: a communication permission determination means for determining, in accordance with a policy that is information associating a match condition, being information identifying a packet, with communication permission information, indicating whether to permit communication of a packet matching the match condition to a destination apparatus, whether to permit communication of a packet matching the match condition to the destination apparatus, on the basis of information (corresponding to the above described "Packet-In message") on the packet received by a packet relay apparatus; and a rule setting means for setting a rule for carrying out processing of not transferring the packet to the destination apparatus, in at least the packet relay apparatus receiving the packet, when the communication permission determination means determines not to permit communication of the packet matching the match condition to the destination apparatus.

### [Citation List]

### [Patent Literature]

[PTL 1] International Publication WO 2013/051386
[PTL 2] Domestic Re-publication of PCT International Application No. 2011/083682
[PTL 3] Domestic Re-publication of PCT International Application No. 2011/115168
[PTL 4] Domestic Re-publication of PCT International Application No. 2011/030490

### [Non-Patent Literature]

[NPL 1] Nick McKeown and seven others, "OpenFlow: Enabling Innovation in Campus Networks", [online], [searched on April 7, 2014], Internet <URL:
   http://archive.openflow.org/documents/openflow-wp-latest.pdf>
[NPL 2] "OpenFlow Switch Specification" Version 1.1.0 Implemented (Wire Protocol 0x02), [online], [searched on April 7, 2014], Internet <URL:
   http://archive.openflow.org/documents/openflow-spec-v1.1.0.pdf>

### [Summary of Invention]

### [Technical Problem]

The following analysis is obtained on the basis of the present invention. In a network with centralized control described above, a communication apparatus (switch) repeatedly receives the same packet in some cases. Depending on an interval at which the packet is received, the packet is discarded at the communication apparatus (switch), causing a situation where the control apparatus (controller) receives almost no packet or no packet at all.

The above situation occurs depending on a limitation of throughput at which the communication apparatus (switch) can transmit query messages regarding flow entries to the control apparatus (controller). In addition, the above situation may occur in a case where a function of controlling transmission of a packet having the same header information as that of a stacked packet is implemented in the communication apparatus (switch) as in PTL 1.

Meanwhile, the inventor of the present application conceived that it is not necessary to transmit, to the control apparatus (controller), all packets for notifying the control apparatus of a state of an external device or the like among the packets discarded by the communication apparatus (switch). For example, a packet transmitted by an external redundant system to notify the control apparatus of an apparatus state (active state / stand-by state) needs to be transmitted to the control apparatus (controller) only when a change in value is made in the packet, which suggests that such a packet does not need to be transmitted to the control apparatus (controller), during no change in value being made. Similarly, even when a change in value is made, the packet does not need to be transmitted to the control apparatus (controller) in some cases, such as a case that the change is within a range that can be predicted by the control apparatus (controller) or the change does not require any particular processing.

Further, reduction in load on the control apparatus (controller) is desired, and reduction of query messages regarding flow entries based on reception of packets is desired.

A purpose of the present invention is to provide a communication apparatus, a control apparatus, a communication system, a method of processing a received packet, a method of controlling the communication apparatus, and a program that are capable of contributing to increasing variety of methods of reducing transmission of query messages regarding flow entries described above (packet reception notifications).

### [Solution to Problem]

According to the first aspect of the present disclosure, a communication apparatus including a packet reception notification unit configured to transmit, when receiving a predetermined packet, a packet reception notification that indicates receiving of the packet, to a predetermined control apparatus, is provided. The communication apparatus further includes a packet observation unit configured to receive a designated packet that is designated in advance, among the predetermined packets, from the packet reception notification unit, and to prevent transmission of a packet reception notification to the control apparatus when a state value included in the designated packet satisfies a predetermined condition.

According to the second aspect of the present disclosure, a control apparatus including means for notifying the designated packet, to a communication apparatus including a packet reception notification unit configured to transmit, when receiving a predetermined packet, a packet reception notification indicating receiving of the packet, to a predetermined control apparatus, and a packet observation unit configured to receive a designated packet, which is designated in advance, among the predetermined packets, from the packet reception notification unit, and to prevent transmission of a packet reception notification to the control apparatus when a state value included in the designated packet satisfies a predetermined condition, is provided.

According to the third aspect of the present disclosure, a communication system including a communication apparatus including a packet reception notification unit configured to transmit, when receiving a predetermined packet, a packet reception notification indicating receiving of the packet, to a predetermined control apparatus, and a packet observation unit configured to receive a designated packet, which is designated in advance, among the predetermined packets, from the packet reception notification unit, and to prevent transmission of a packet reception notification to the control apparatus when a state value included in the designated packet satisfies a predetermined condition; and a control apparatus including means for notifying the communication apparatus of the designated packet, is provided.

According to the fourth aspect of the present disclosure, a method of controlling transmission of a packet reception notification is provided. The method includes the steps of, in a communication apparatus including a packet reception notification unit configured to transmit, when receiving a predetermined packet, a packet reception notification indicating that receiving of the packet , to a predetermined control apparatus checking whether a state value included in a designated packet designated by the control apparatus among the predetermined packets satisfies a predetermined condition, and preventing transmission of a packet reception notification to the control apparatus when the state value included in the designated packet satisfies the predetermined condition. The method is associated with a specific apparatus that realized the the communication apparatus configured to transmit, when receiving a packet, a packet reception notification indicating that receiving of the packet , to a predetermined control apparatus.

According to a fifth aspect, a program for implementing the functions of the above-described communication apparatus or control apparatus is provided. This program can be recorded in a computer-readable (non-transient) storage medium. In other words, the present invention can be implemented as a computer program product.

### [Advantageous Effects of Invention]

According to the present invention, it is possible to contribute to increasing variety of methods of reducing transmission of query messages regarding flow entries (packet reception notifications).

### [Brief Description of Drawings]

[Fig. 1] Fig. 1 is a diagram illustrating a configuration according to an exemplary embodiment of the present invention.
[Fig. 2] Fig. 2 is a diagram illustrating a configuration of a communication system of a first exemplary embodiment of the present invention.
[Fig. 3] Fig. 3 is a diagram illustrating a configuration of an OpenFlow switch (OFS) according to the first exemplary embodiment of the present invention.
[Fig. 4] Fig. 4 is a diagram illustrating an example of entries registered in an OFS flow table according to the first exemplary embodiment of the present invention.
[Fig. 5] Fig. 5 is a diagram illustrating a configuration of a controller according to the first exemplary embodiment of the present invention.
[Fig. 6] Fig. 6 is a diagram for explaining operations according to the first exemplary embodiment of the present invention.
[Fig. 7] Fig. 7 is another diagram for explaining operations according to the first exemplary embodiment of the present invention.
[Fig. 8] Fig. 8 is another diagram for explaining operations according to the first exemplary embodiment of the present invention.
[Fig. 9] Fig. 9 is a diagram illustrating a configuration of an OpenFlow switch (OFS) according to a second exemplary embodiment of the present invention.
[Fig. 10] Fig. 10 is a diagram illustrating an example of entries registered in an OFS flow table according to the second exemplary embodiment of the present invention.
[Fig. 11] Fig. 11 is a diagram illustrating another example of entries registered in an OFS flow table according to the second exemplary embodiment of the present invention.
[Fig. 12] Fig. 12 is a diagram illustrating a state after rewriting of the entries registered in the OFS flow table according to the second exemplary embodiment of the present invention.

### [Description of Embodiments]

First, an overview of an exemplary embodiment of the present invention is described with reference to the drawings. The reference signs from the drawings used in this overview are assigned to components, for convenience, as an example for assisting the understanding, and are not intended to limit the present invention to any of the examples illustrated in the drawings.

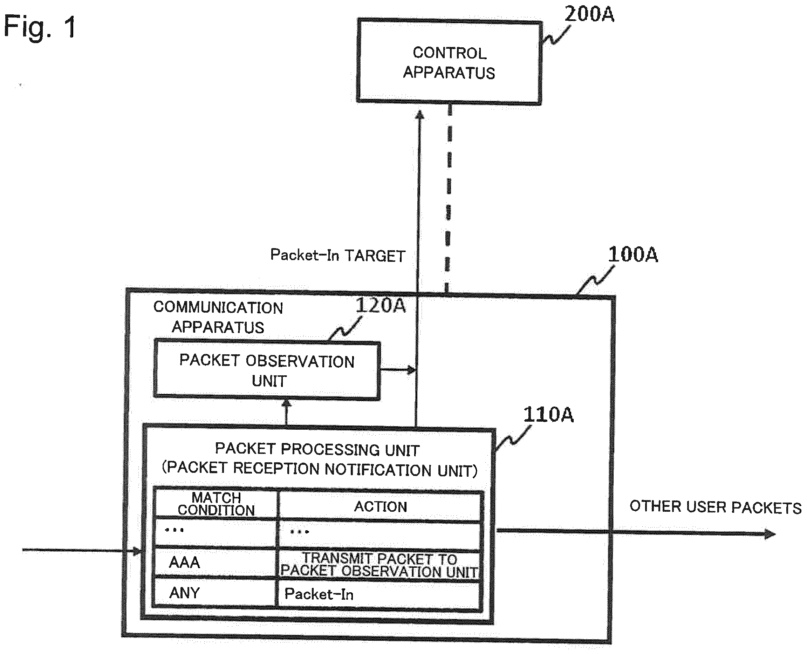

In the exemplary embodiment, the present invention is implementable by a communication apparatus 100A including a packet processing unit 110A and a packet observation unit, as illustrated in Fig. 1.

More specifically, the packet processing unit 110A of the communication apparatus 100A functions as a packet reception notification unit that transmits, when each predetermined packet is received, a packet reception notification indicating that the packet has been received, to a predetermined control apparatus 200A. In addition, the packet processing unit 110A transmits, among the predetermined packets, a designated packet designated by the control apparatus, to the packet observation unit 120A.

When a state value included in the designated packet received from the packet processing unit 110A satisfies a predetermined condition, the packet observation unit 120A prevents transmission of the packet reception notification to the control apparatus. As the predetermined condition, for example, a condition that the state value has not changed from the previous learnt value or a condition that the state value is within a predetermined range, may be set depending on type of control-target packet.

The designated packet is preferably instructed by the control apparatus 200A. For example, the control apparatus 200A sets, in the communication apparatus 100A, control information containing a transfer-target packet to be transferred to the packet observation unit 120A (match condition "AAA" in the table in the packet processing unit 110A in Fig. 1) and a designated operation to be performed on the packet ("transmit packet to packet observation unit" in the table). The control information designating a packet reception notification (Packet-In) to the control apparatus 200A with a match condition of ANY in Fig. 1, is control information applied for making a notification about packet reception, which information has a lower priority than that for control information for instructing transfer of a packet to the packet observation unit. The control information for making a notification about a packet reception is set in order to perform the above-described operation of the packet processing unit 110A for making a notification to the control apparatus 200A.

With the above-configuration, it is possible to perform such a control as to prevent transmission of a query message (packet reception notification) regarding a flow entry by the communication apparatus 100A. Preventing transmission of a query message (packet reception notification) regarding a flow entry contributes also to a reduction in load on the control apparatus 200A. Packets for which the transmission prevention control is performed are not particularly limited as long as the packets are configured to notify the control apparatus 200A of a change in state value. Examples of such packets include a packet indicating an operation state of an external redundant system and a packet in which sensor information of any kind is stored.

### [First Exemplary Embodiment]

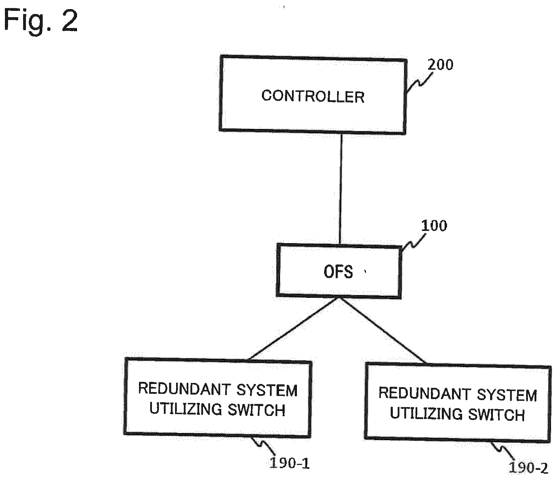

Next, a first exemplary embodiment of the present invention is described in detail with reference to the drawings. Fig. 2 is a diagram illustrating a configuration of a communication system according to the first exemplary embodiment of the present invention. With reference to Fig. 2, a configuration, including two redundant system utilizing switches 190-1 and 190-2, an OpenFlow switch (referred to as "OFS" below) 100 connected to the redundant system utilizing switches 190-1 and 190-2, and a controller 200 configured to control the OFS 100, is illustrated.

The redundant system utilizing switches 190-1 and 190-2 are switches used by respective external redundant systems and are controlled so that at least one of them operates in an active state (ACT) whereas the other waits in an stand-by state (SBY). The redundant system utilizing switches 190-1 and 190-2 do not limited to physically configured switches and may be, for example, virtual switches that operate in a server virtualizing environment.

Each of the redundant system utilizing switches 190-1 and 190-2 transmits, to the OFS 100, a packet for making a notification about a current operation state, from the redundant system to which each switch belongs.

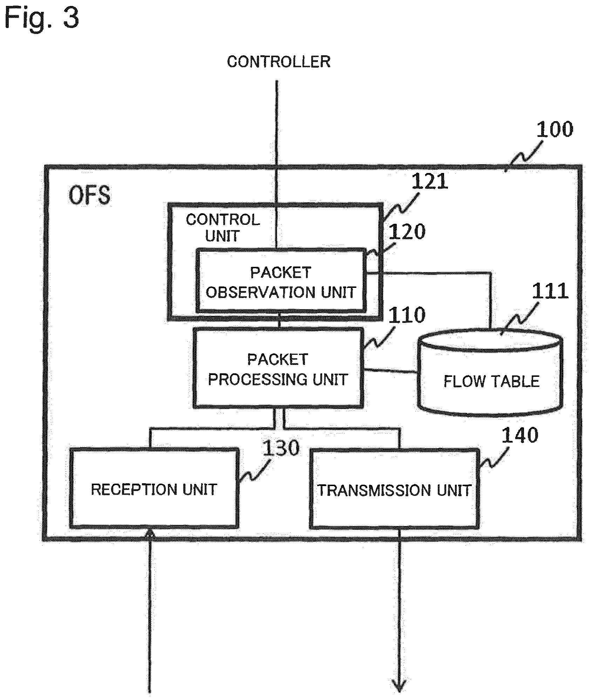

Fig. 3 is a block diagram illustrating a configuration of the above OFS 100. With reference to Fig. 3, a configuration, including a packet processing unit 110, a control unit 121, a flow table 111, a reception unit 130, and a transmission unit 140, is illustrated.

When receives a packet via the reception unit 130, the packet processing unit 110 searches the flow table 111 for an entry having a match condition matching the received packet. When an entry having the match condition matching the received packet is found as a result of the searching, the packet processing unit 110 processes the packet in accordance with the processing content (any of a conditional packet reception notification to the controller proposed in the present description, in addition to processing such as transfer, discard, or header rewriting) defined in the action field of the entry. For example, when the received packet is a packet received from the redundant system utilizing switch 190-1 in operation, the packet processing unit 110 searches the flow table 111 for an entry for processing the packet and outputs the packet via the transmission unit 140, in accordance with the operation in the entry.

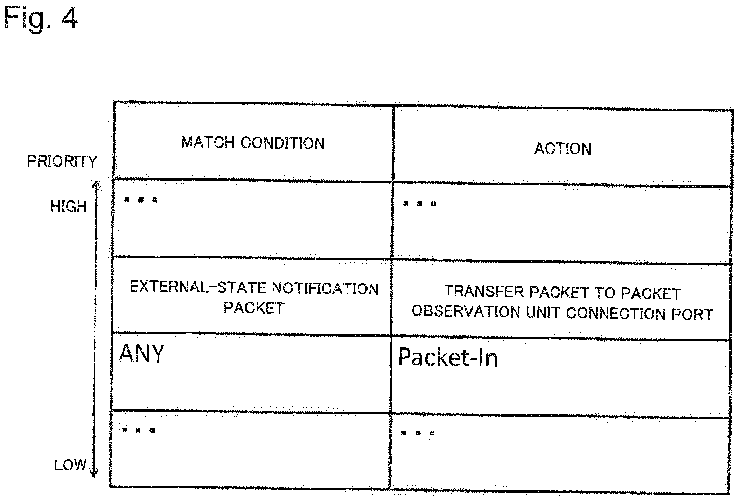

Description of entries registered in the flow table 111 in the OFS 100 in Fig. 3, is given as below. Fig. 4 illustrates an example of entries registered in the flow table 111 in the OFS 100. The entry in Fig. 4 indicating "match condition = external-state notification packet" and "action (processing content) = transfer packet to packet observation unit connection port" is an entry for transferring an external-state notification packet to the packet observation unit 120. In the example in Fig. 4, there is a registered entry for notifying the controller 200 of reception of an unknown packet ("match condition = ANY") having a lower priority than the entry for transferring a packet to the packet observation unit 120. Note that, in the example in Fig. 4, it is assumed that entries stored in higher positions have higher priorities. Similar priority control is possible, for example, by including priority information in each entry. In addition, although entries for enabling known communications through the OFS 100 are omitted in the example in Fig. 4, higher priorities are normally assigned to such entries than the entry for making a packet reception notification.

The control unit 121 is configured to transmit and receive a control message to and from the controller 200 and also includes the packet observation unit 120. When receives an external-state notification packet from the packet processing unit 110, the packet observation unit 120 checks whether any change has been made to the state value indicated by the packet. When a result of the checking indicates that no change has been made to the state value indicated by the packet, the packet observation unit 120 discards the external-state notification packet received from the packet processing unit 110. Consequently, a packet reception notification to the controller 200 based on receipt of the external-state notification packet of which state value is unchanged, is prevented.

In contrast, when a change has been made to the state value indicated by the external-state notification packet (including a case of receiving an external-state notification packet for the first time), the packet observation unit 120 transmits, to the controller 200, a packet reception notification (Packet-In message) for notifying the controller 200 of the reception of the external-state notification packet. The control unit 121 is configured to transmit a packet reception notification to the controller 200 based on reception of an unknown packet ("match condition = ANY") other than the external-state notification packet.

In the example in Fig. 4, a flow entry for an external-state notification packet is registered. Alternatively, it is possible to employ a configuration of transmitting all unknown packets to the packet observation unit 120 of the control unit 121. In this case, processing of selection of external-state notification packets is carried out by the packet observation unit 120.

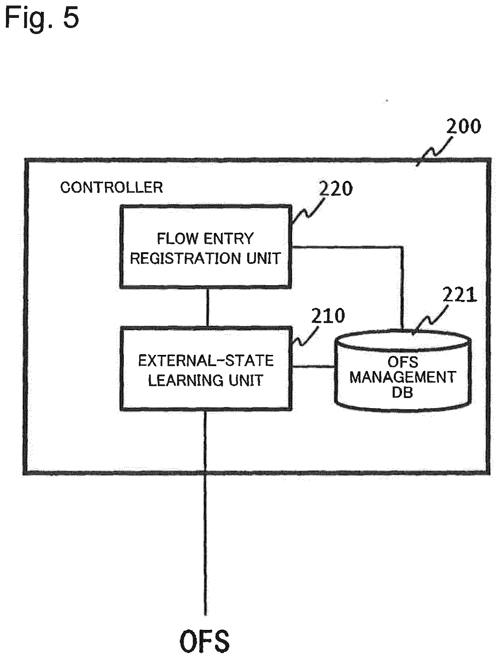

Next, a configuration of the controller 200 that registers the entries illustrated in Fig. 4 is described. Fig. 5 is a diagram illustrating a configuration of the controller according to the first exemplary embodiment of the present invention. With reference to Fig. 5, a configuration including an external-state learning unit 210, a flow entry registration unit 220, and an OFS management database (OFS management DB) 221, is illustrated.

The external-state learning unit 210 functions as a state management unit that learns an external state on the basis of the external-state notification packet being transmitted by the OFS 100 and having a change in state value, and thereby manages an operation state of the redundant system. For example, when an external-state notification packet (ACT) indicating the active state is received from the redundant system utilizing switch 190-1 via the OFS 100, the external-state learning unit 210 manages, by the use of the OFS management DB 221 or the like, the information representing that the redundant system utilizing switch 190-1 is in the active state. Similarly, when an external-state notification packet (SBY) indicating the stand-by state is received from the redundant system utilizing switch 190-2 via the OFS 100, the external-state learning unit 210 manages, by the use of the OFS management DB 221 or the like, the information representing that the redundant system utilizing switch 190-2 is in the stand-by state. Alternatively, a storage apparatus other than the OFS management DB 221 may be used for the learning of external states.

On the basis of packet reception notifications and the like received from the OFS, the flow entry registration unit 220 creates entries for appropriately processing various packets and registers the entries in the flow table 111 of the OFS 100. Alternatively, the flow entry registration unit 220 may be configured to receive an operation by a network manager via an external terminal or the like, and to register the flow entry for designating an external-state notification packet illustrated in Fig. 4.

The entries already registered in the flow table 111 of each OFS are stored in the OFS management DB 221. The flow entry registration unit 220 determines whether to create an entry to register in the flow table 111, by referring to the OFS management DB 221. The OFS management DB 221 may be configured to store the above-described external states, network topology information, information on terminals connected to the OFS, and the like. In this case, an unillustrated OFS management unit updates above information and the like by the use of received packets including an external-state notification packet from the OFS.

The units (processing means) and functions constituting the communication apparatus, the control apparatus, the OFS, and the controller illustrated in Fig. 1, Fig. 2, and Fig. 5, may be implemented as a computer program causing computers configuring these apparatuses to execute the above-described respective processing by using the hardware of the computers.

In the following, operations according to this exemplary embodiment are described in detail with reference to the drawings. In the description below, it is assumed that an external-state notification packet indicating the active state (ACT) from the redundant system utilizing switch 190-1 in Fig. 2 has arrived. It is also assumed that an external-state notification packet indicating the stand-by state (SBY) from the redundant system utilizing switch 190-2 has arrived. It is also assumed that learning about the external states is already completed in the OFS 100 and the controller 200.

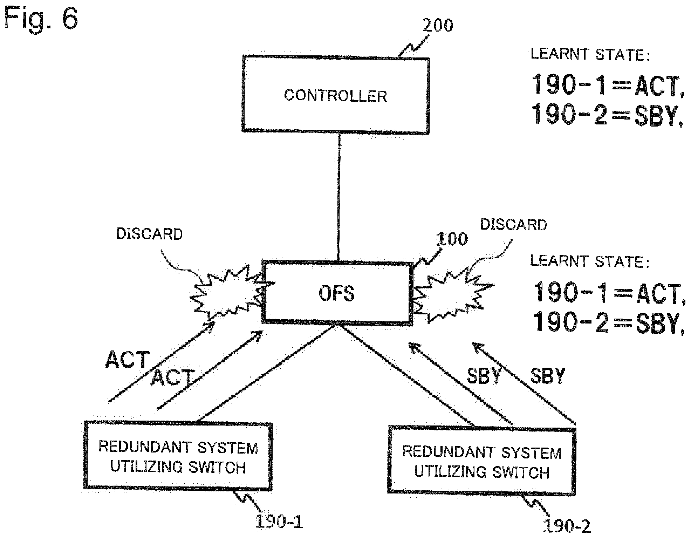

Consider a case where an external-state notification packet indicating the active state (ACT) is transmitted from the redundant system utilizing switch 190-1 in the above-described state. In this case, since no change has been made to the state value (ACT) in the external-state notification packet received from the redundant system utilizing switch 190-1, the packet observation unit 120 of the OFS 100 discards the received external-state notification packet as illustrated in Fig. 6.

Similarly, an external-state notification packet indicating the stand-by state (SBY) is transmitted from the redundant system utilizing switch 190-2, the packet observation unit 120 of the OFS 100 discards the received external-state notification packet since no change has been made to the state value (SBY) in the external-state notification packet received from the redundant system utilizing switch 190-2.

In the above-described manner, a packet reception notification to the controller 200 caused by reception of any external-state notification packet with no change in state value, is prevented.

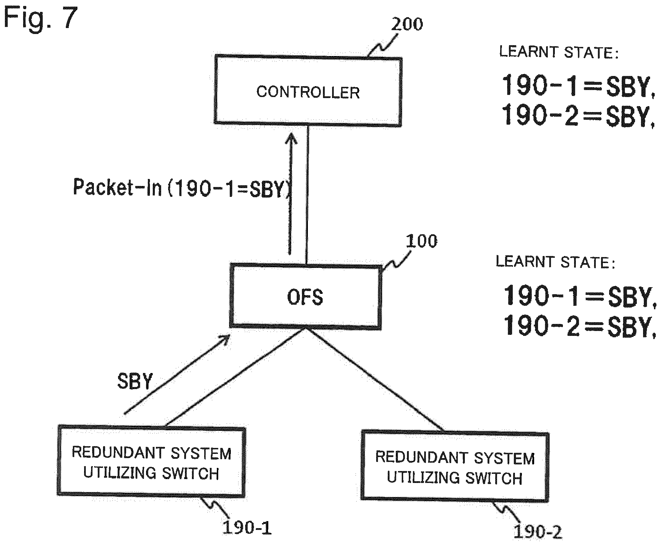

Assume that, then, the external state has changed, and the redundant system utilizing switch 190-1 has transmitted the external-state notification packet indicating the stand-by state (SBY). In this case, since the state value has changed (ACT to SBY) in the external-state notification packet received from the redundant system utilizing switch 190-1, the packet observation unit 120 of the OFS 100 notifies the controller 200 of the reception of the external-state notification packet (Packet-In ("190-1 = SBY")), as illustrated in Fig. 7. The controller 200 learns that the redundant system utilizing switch 190-1 is in the stand-by state. Similarly, the packet observation unit 120 of the OFS 100 also learns that the redundant system utilizing switch 190-1 is in the stand-by state.

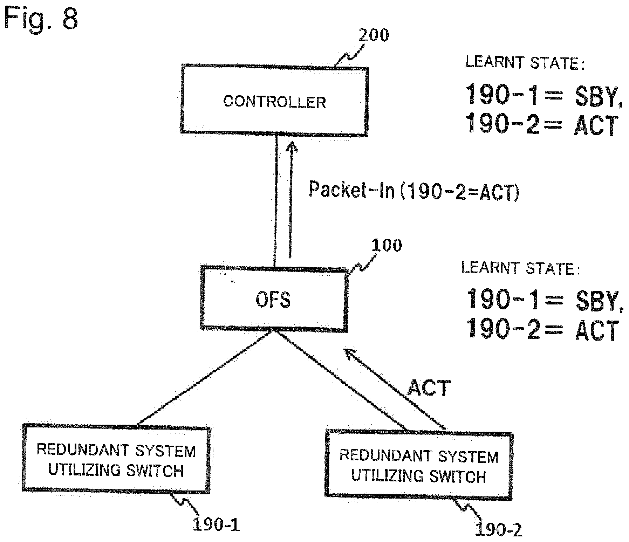

Meanwhile, when the redundant system utilizing switch 190-2 has transmitted the external-state notification packet indicating the active state (ACT), the packet observation unit 120 of the OFS 100 notifies the controller 200 of the reception of the external-state notification packet (Packet-In ("190-2 = ACT")) since the state value has changed (SBY to ACT) in the external-state notification packet received from the redundant system utilizing switch 190-2, as illustrated in Fig. 8. The controller 200 learns that the redundant system utilizing switch 190-2 is in the active state. Similarly, the packet observation unit 120 of the OFS 100 also learns that the redundant system utilizing switch 190-2 is in the active state.

Then, during the period in which the redundant system utilizing switch 190-1 is transmitting external-state notification packets indicating the stand-by state (SBY) the packet observation unit 120 of the OFS 100 discards the packets, as opposed to the state illustrated in Fig. 6. Similarly, during the period in which the redundant system utilizing switch 190-2 is transmitting external-state notification packets indicating the active state (ACT), the packet observation unit 120 of the OFS 100 discards the packets.

As described above, according to this exemplary embodiment, transmission of a packet reception notification caused by reception of the external-state notification packet can be prevented. Although this control prevents such external-state notification packets from reaching the controller 200, this does not cause any problem since it is checked that the state values has not been changed.

### [Second Exemplary Embodiment]

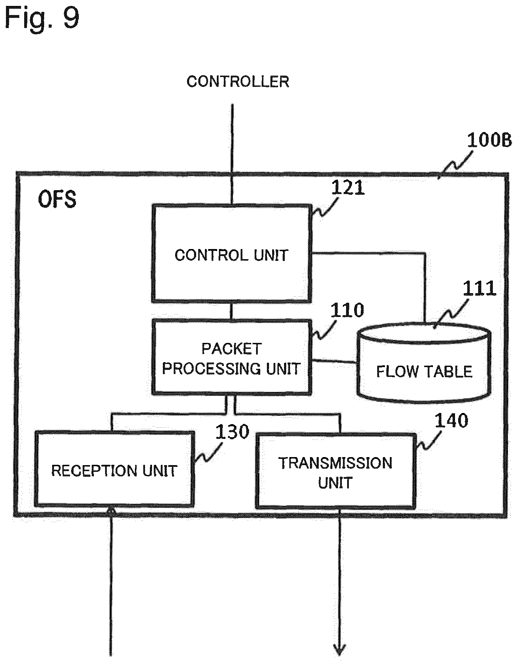

In the following, description with regard to a second exemplary embodiment is provided. In the second exemplary embodiment, a function equivalent to that of the packet observation unit 120 in the above-described OFS 100 is implemented by flow entries. Fig. 9 is a diagram illustrating a configuration of an OpenFlow switch (OFS) 100B according to the second exemplary embodiment of the present invention. Major differences between OFS 100B and the OFS 100 according to the first exemplary embodiment illustrated in Fig. 3 is that the packet observation unit 120 of the control unit 121 is omitted and a function equivalent to that of the packet observation unit 120 is implemented by entries in the flow table 111. Since other part of basic configuration and operations of the second exemplary embodiment are similar to those of the first exemplary embodiment, mainly, description of the difference is given below.

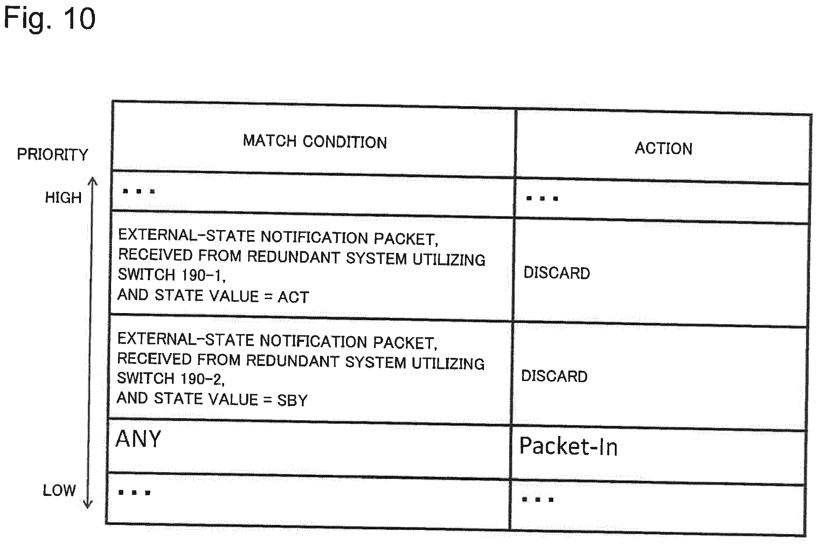

Fig. 10 is a diagram illustrating an example of entries registered in a flow table in the OFS according to the second exemplary embodiment of the present invention. In the example in Fig. 10, the characteristics of an external-state notification packet (the address, protocol number, or the like of each layer), a reception switch (the connection port of the redundant system utilizing switch), and a value (learnt value) in an area for storing the state value in the packet, are set as each match condition. The example in Fig. 10 illustrates entries registered when the controller 200 regards that the operation state of the redundant system to which the redundant system utilizing switch 190-1 is connected is the active state (ACT) and that the operation state of the redundant system to which the redundant system utilizing switch 190-2 is connected is the stand-by state (SBY). When a packet matching any of these match conditions is received, the OFS 100 discards the packet. When the packet reception notification to the controller 200 is performed since a packet that does not match any of the flow entries is received, the controller 200 learns the external state and performs processing of rewriting the value (learnt value) in the area for storing the state value in the match condition of the flow entry. Thereafter, the OFS 100B detects whether the state value in each external-state notification packet has been changed or not, under the match conditions obtained as a result of the rewriting.

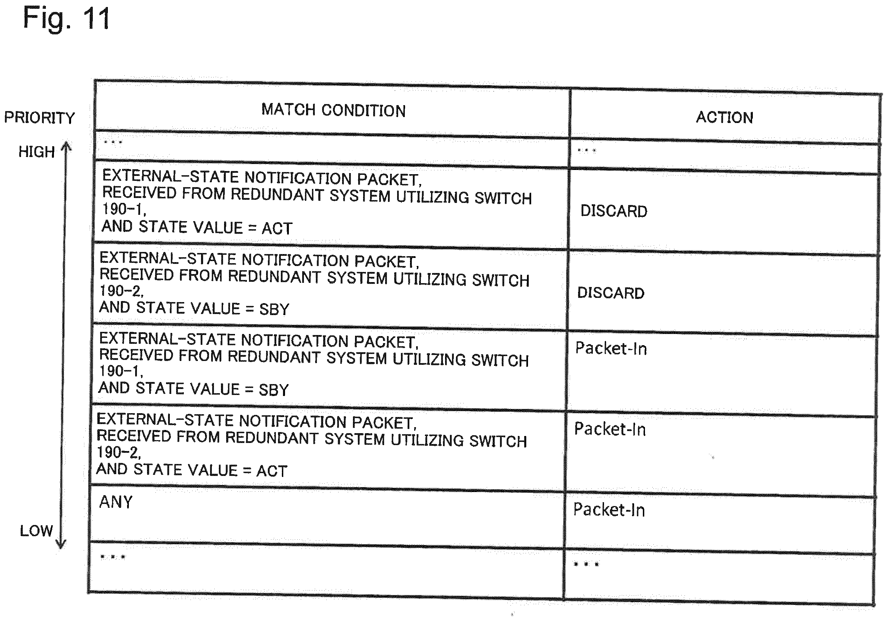

Fig. 11 is a diagram illustrating another example of entries registered in the flow table in the OFS according to the second exemplary embodiment of the present invention. In the example in Fig. 11, in addition to the flow entries in Fig. 10, a second flow entry for explicitly transferring, when a change has been made to the state value indicated by an external-state notification packet, the external-state notification packet to the controller 200, is registered. For example, when an external-state notification packet with the state value of stand-by (SBY) is received from the redundant system utilizing switch 190-1 while the controller 200 has learnt that the redundant system utilizing switch 190-1 is operating in the active state, a packet reception notification (Packet-In) to the controller 200 is transmitted in accordance with the third entry from the top in Fig. 11.

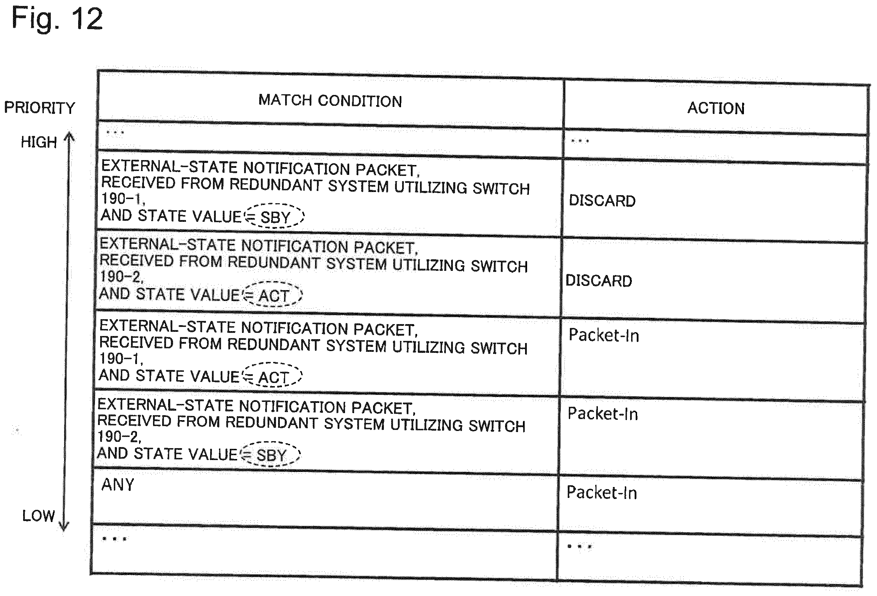

When the packet reception notification to the controller 200 is performed, the OFS 100 performs the processing of rewriting the value (learnt value) in the area for storing the state value in the match condition of the flow entry, according to an instruction by the controller 200 or by itself, as illustrated in Fig. 12. Thereafter, detection of whether the state value of the external-state notification packet has been changed is continued under the match condition obtained as a result of the rewriting. Instead of the rewriting of the value (learnt value) in the area for storing the state value in the match condition of the flow entry, it is also possible to perform processing of replacing the processing content column. In this case, the packet reception notification (Packet-In) to the controller 200 is registered in the entry in which "discard" is set to the action field in Fig. 11 before. In addition, "discard" is set in the entry in which the packet reception notification (Packet-In) to the controller 200 is set before. This results in the same as that in Fig. 12 with the only difference in priority.

As described above, the function equivalent to that of the packet observation unit 120 of the present invention may be implemented by flow entries for enabling to identify an external-state notification packet and to detect a change in state value. According to this exemplary embodiment, an external state can be stored in the flow entry, which provides an advantage of simplifying configuration for the communication apparatus (OFS).

The exemplary embodiments of the present invention are described above. However, the present invention is not limited to the above-described exemplary embodiments, and further modification, replacement, and adjustment can be made to the exemplary embodiments without departing from the fundamental technical spirit of the present invention. For example, the network configuration, the configuration of each component, and the representing form of each message illustrated in the drawings are examples for assisting the understanding of the present invention, and the present invention is not limited to any of the configurations illustrated in the drawings.

For example, in the above-described first and second exemplary embodiments, the external-state notification packet for making a notification about the operation state of the redundant system is used as the designated packet (control-target packet). However, packets for making a notification about other information, such as sensor information, may also be used as designated packets (control-target packets). In this case, modification is made so that the packet reception notification to the controller is prevented when a sensor information value is within a certain range, and a packet reception notification is transmitted to the controller when the sensor information value exceeds the certain range or a regulation upper limit (or lower limit).

Preferable modes of the present invention may be summarized as follows.

### [MODE 1]

(Refer to the communication apparatus according to the above described first aspect of the present disclosure.)

### [MODE 2]

The communication apparatus according to MODE 1, wherein the designated packet is a packet for making a notification about an operation state of a redundant system managed by the control apparatus, or a packet in which a sensor value is stored.

### [MODE 3]

The communication apparatus according to MODE 1 or 2, wherein
the packet reception notification unit includes a packet processing unit configured to process a received packet by referring to control information associating a match condition that is matched with the received packet, with a processing content to be applied to a packet that matches the match condition, and
the designated packet is designated by rewriting a match condition in the control information.

### [MODE 4]

The communication apparatus according to MODE 3, wherein,
as the control information,
first control information for discarding the designated packet when a state value included in the designated packet satisfies a predetermined condition, and
second control information for transferring the designated packet to the control apparatus when the state value included in the designated packet does not satisfy the predetermined condition, are registered, and
match conditions or processing contents in the first control information and the second control information are replaced with each other after the designated packet is transferred to the control apparatus in accordance with the second control information.

### [MODE 5]

(Refer to the control apparatus according to the above described second aspect of the present disclosure.)

### [MODE 6]

The control apparatus according to MODE 5, further including a state management unit configured to manage an operation state of a redundant system, wherein
a packet for making a notification about an operation state of a redundant system is designated as the designated packet in the communication apparatus.

### [MODE 7]

The control apparatus according to MODE 5 or 6, wherein transmission of the packet reception notification is controlled by registering, in the communication apparatus, control information associating a match condition that is matched with a received packet, with a processing content to be applied to a packet matching the match condition.

### [MODE 8]

The control apparatus according to MODE 7, wherein
as the control information,
first control information for discarding the designated packet when a state value included in the designated packet satisfies a predetermined condition, and
second control information for transferring the designated packet to the control apparatus when the state value included in the designated packet does not satisfy the predetermined condition, are registered, in the communication apparatus, and
the communication apparatus is controlled so that match conditions or processing contents in the first control information and the second control information are replaced with each other after the designated packet is transferred to the control apparatus in accordance with the second control information.

### [MODE 9]

(Refer to the communication system according to the above described third aspect of the present disclosure.)

### [MODE 10]

(Refer to the communication system according to the above described fourth aspect of the present disclosure.)

### [MODE 11]

A computer program allowing a computer including a packet reception notification unit configured to transmit, when receiving a predetermined packet, a packet reception notification indicating that receiving of the packet , to a predetermined control apparatus, to execute processing of :
checking whether a state value included in a designated packet designated by the control apparatus among the predetermined packets satisfies a predetermined condition; and
preventing transmission of a packet reception notification to the control apparatus when the state value included in the designated packet satisfies the predetermined condition.

Above described MODE 2 to MODE 4 can be derived from each of above described MODE 9 to MODE 11, in the same manner as the MODE 1.

The disclosures of the above-described patent literature and non-patent literature are incorporated in this description by reference. Modifications and adjustments can be made to the exemplary embodiments and examples on the basis of the fundamental technical spirit of the present invention within the scope of the entire disclosure (including the scope of claims) of the present invention. In addition, various combinations and selections are possible among the disclosed components (including the components in the claims, the components in the exemplary embodiments and examples, and the components in the drawings) within the range of the disclosure of the present invention. In other words, the present invention obviously includes various changes and modifications possible for those skilled in the art to make according to the entire disclosure including the scope of claims and the technical spirit. In particular, it should be understood that each numerical range included in this description concretely describes any numerical value or any smaller range included in the numerical range, even when no particular description is provided.

### [Reference signs List]

- 100, 100B: OpenFlow switch (OFS)
- 100A: Communication apparatus
- 110, 110A: Packet processing unit
- 111: Flow table
- 120, 120A: Packet observation unit
- 121: Control unit
- 130: Reception unit
- 140: Transmission unit
- 190-1, 190-2: Redundant system utilizing switch
- 200: Controller
- 200A: Control apparatus
- 210: External-state learning unit
- 220: Flow entry registration unit
- 221: OFS management database (OFS management DB)

## Claims

1. A communication apparatus comprising:
a packet reception notification unit configured to transmit, when receiving a predetermined packet, a packet reception notification that indicates receiving of the packet, to a predetermined control apparatus; and
a packet observation unit configured to receive a designated packet that is designated in advance, among the predetermined packets, from the packet reception notification unit, and to prevent transmission of a packet reception notification to the control apparatus when a state value included in the designated packet satisfies a predetermined condition.

2. The communication apparatus according to Claim 1, wherein the designated packet is a packet for making a notification about an operation state of a redundant system managed by the control apparatus, or a packet in which a sensor value is stored.

3. The communication apparatus according to Claim 1 or 2, wherein
the packet reception notification unit constituted from a packet processing unit configured to process a received packet by referring to control information associating a match condition that is matched with the received packet, with a processing content to be applied to a packet that matches the match condition, and
the designated packet is designated by rewriting a match condition in the control information.

4. The communication apparatus according to Claim 3, wherein,
as the control information,
first control information for discarding the designated packet when a state value included in the designated packet satisfies a predetermined condition, and
second control information for transferring the designated packet to the control apparatus when the state value included in the designated packet does not satisfy the predetermined condition, are registered, and
match conditions or processing contents in the first control information and the second control information are replaced with each other after the designated packet is transferred to the control apparatus in accordance with the second control information.

5. A control apparatus comprising means for notifying the designated packet to a communication apparatus including:
a packet reception notification unit configured to transmit, when receiving a predetermined packet, a packet reception notification indicating receiving of the packet, to a predetermined control apparatus, and
a packet observation unit configured to receive a designated packet, which is designated in advance, among the predetermined packets, from the packet reception notification unit, and to prevent transmission of a packet reception notification to the control apparatus when a state value included in the designated packet satisfies a predetermined condition.

6. The control apparatus according to Claim 5, further comprising a state management unit configured to manage an operation state of a redundant system, wherein
a packet for making a notification about an operation state of a redundant system is designated as the designated packet in the communication apparatus.

7. The control apparatus according to Claim 5 or 6, wherein transmission of the packet reception notification is controlled by registering, in the communication apparatus, control information associating a match condition that is matched with a received packet, with a processing content to be applied to a packet matching the match condition.

8. The control apparatus according to Claim 7, wherein
as the control information,
first control information for discarding the designated packet when a state value included in the designated packet satisfies a predetermined condition, and
second control information for transferring the designated packet to the control apparatus when the state value included in the designated packet does not satisfy the predetermined condition, are registered, in the communication apparatus, and
the communication apparatus is controlled so that match conditions or processing contents in the first control information and the second control information are replaced with each other after the designated packet is transferred to the control apparatus in accordance with the second control information.

9. A communication system comprising:
a communication apparatus including
a packet reception notification unit configured to transmit, when receiving a predetermined packet, a packet reception notification indicating receiving of the packet, to a predetermined control apparatus, and
a packet observation unit configured to receive a designated packet, which is designated in advance, among the predetermined packets, from the packet reception notification unit, and to prevent transmission of a packet reception notification to the control apparatus when a state value included in the designated packet satisfies a predetermined condition; and
a control apparatus including means for notifying the communication apparatus of the designated packet.

10. A method of controlling transmission of a packet reception notification, the method comprising the steps of, in a communication apparatus including a packet reception notification unit configured to transmit, when receiving a predetermined packet, a packet reception notification indicating that receiving of the packet , to a predetermined control apparatus:
checking whether a state value included in a designated packet designated by the control apparatus among the predetermined packets satisfies a predetermined condition; and
preventing transmission of a packet reception notification to the control apparatus when the state value included in the designated packet satisfies the predetermined condition.
